# EUROPÄISCHE PATENTSCHRIFT

(11) **EP 2 176 075 B1**
(45) Veröffentlichungstag und Bekanntmachung des Hinweises auf die Patenterteilung: **16.03.2011**
(21) Anmeldenummer: 09734103.6
(22) Anmeldetag: 20.04.2009
(51) Int. Cl.: B60B 19/12

(54) **OMNIDIREKTIONAL-RAD UND VERFAHREN ZUR MONTAGE VON ROLLKÖRPERN EINES OMNIDIREKTIONAL-RADES, SOWIE OMNIDIREKTIONAL BEWEGLICHES FAHRWERK UND DESSEN VERWENDUNG**
OMNI-DIRECTIONAL WHEEL AND METHOD FOR THE INSTALLATION OF ROLLER BODIES OF AN OMNI-DIRECTIONAL WHEEL, AND OMNI-DIRECTIONAL MOVABLE CHASSIS AND THE USE THEREOF
ROUE OMNIDIRECTIONNELLE, PROCÉDÉ DE MONTAGE DE CORPS ROULANTS D'UNE ROUE OMNIDIRECTIONNELLE, CHÂSSIS MOBILE OMNIDIRECTIONNEL ET UTILISATION DE CELUI-CI

(30) Priorität: 21.04.2008 DE 102008019976
(43) Veröffentlichungstag der Anmeldung: 21.04.2010
(73) Patentinhaber: KUKA Roboter GmbH, 86165 Augsburg (DE)
(72) Erfinder: BRUDNIOK, Sven, 86157 Augsburg (DE)
(74) Vertreter: Patentanwälte Funk & Böss GbR
(86) Internationale Anmeldenummer: PCT/EP2009/002861
(87) Internationale Veröffentlichungsnummer: WO 2009/129978

(56) Entgegenhaltungen:
- WO-A1-03/068352
- DE-A1- 2 354 404
- DE-U1-202005 012 682
- GB-A- 2 242 173

## Beschreibung

Die Erfindung betrifft ein Omnidirektional-Rad und ein Verfahren zur Montage von Rollkörpern eines Omnidirektional-Rades, sowie ein omnidirektional bewegliches Fahrwerk und dessen Verwendung.

Aus der DE-OS 21 58 019 ist der Ur-Typ eines Omnidirektional-Rades bekannt. Derartige Räder können zum Bewegen von Fahrzeugen in jede gewünschte Richtung eingesetzt werden, ohne dass die Räder angelenkt am Fahrzeug gelagert werden müssen. Dabei können zwei vordere und zwei hintere rotierende Antriebsanordnungen vorgesehen sein, die jeweils ein Omnidirektional-Rad aufweisen. Die Antriebe sind individuell ansteuerbar und die den Boden berührenden Rollen schräg angeordnet, wobei jeweils ein erstes diagonales Paar von Rädern in derselben Richtung schräg verläuft und ein zweites diagonales Paar von Rädern in einem rechten Winkel zum ersten diagonalen Paar schräg verläuft.

In der gattungsgemäßen WO 2007/016917 A2 ist ein Omnidirektional-Rad offenbart, das eine Radnabe aufweist, die um eine Rotationsachse drehbar ist, wobei zwei mit der Radnabe verbundene Radscheiben koaxial zur Radnabe angeordnet sind und eine Anzahl von balligen Rollkörpern vorgesehen sind, die zwischen den Radscheiben angeordnet, gleichmäßig entlang eines Umfangsmantels des Rades verteilt und mit ihren Rollachsen in einem Diagonalwinkel zur Rotationsachse der Radnabe ausgerichtet sind. An ihren gegenüberliegenden Enden sind die Rollkörper frei drehbar bezüglich der Radscheiben gelagert. Die Rollkörper sind über zugeordnete Lager direkt an den Innenseiten der Radscheiben gelagert. Dies hat den Nachteil, dass sämtliche Lagerstellen fertigungstechnisch aufeinander abgestimmt sein müssen, damit alle Rollkörper konzentrisch und symmetrisch zueinander ohne Lageabweichungen positioniert sind. In einer Folge ist die Montage solcher Räder aufwendig, da während der Montage wiederholt und langwierig die genauen Positionen der Rollkörper eingestellt werden müssen. Darüber hinaus kann auch im bestimmungsgemäßen Gebrauch ein auf das Omnidirektional-Rad aufgebrachtes hohes Drehmoment eine Torsion der Nabe bewirken, die eine Drehbewegung der einen Radscheibe bezüglich der zweiten Radscheibe verursacht, wodurch sämtliche eingestellte Lagen der Rollekörper eine Verschiebung erfahren können. Bewährt hat sich jedoch die Verwendung von gegenüberliegenden Radscheiben, zwischen denen die Rollenkörper angeordnet sind.

Diese Räder weisen am Umfang Rollen auf, die im 45° Winkel zur Drehachse ausgerichtet sind. Die Oberfläche der Rollen ist so gebogen, dass die Umfangsfläche, auf welcher das Rad abrollt, einen Kreis beschreibt. Die Tragstruktur dieser Räder wird durch die beiden Seitenwände gebildet. Die Drehachsen der Rollen werden durch die Lagerflächen in den Seitenwänden positioniert. Durch eine Verdrehung der beiden Seitenwände zueinander, ergibt sich ein Achsversatz der beiden Führungen in denen die Rollen gelagert sind. Dies gilt für alle Rollen. Dies führt zu Problemen mit der Lagerung aller Rollen. Die Auflagerpunkte an beiden Seitenwänden, für alle Rollen am Umfang des Rades, müssen paarweise zueinander ausgerichtet sein und die Achsen der Lagerpunkte zueinander fluchten. Wenn dies nicht der Fall ist, ergibt sich ein Achsversatz der Lagerungen einzelner Räder, was zu Problemen mit der Lagerung dieser Rollen führt, was zu vermeiden ist. Daher müssen im Stand der Technik die Seitenwände mit engen Toleranzen gefertigt werden.

Aufgabe der Erfindung ist es, ein Omnidirektional-Rad unter Beibehaltung von gegenüberliegenden Radscheiben zu schaffen, das robust ist gegenüber Betriebsanforderungen.

Eine weitere Aufgabe der Erfindung ist es, ein Omnidirektional-Rad unter Beibehaltung von gegenüberliegenden Radscheiben zu schaffen, das in hoher Lagepräzision der Rollenkörper hergestellt und betrieben werden kann.

Erfindungsgemäß wird vorgeschlagen, dass das Omnidirektional-Rad die folgenden Merkmale aufweist:
- eine Radnabe, die um eine Rotationsachse drehbar ist,
- zwei mit der Radnabe verbundene Radscheiben, die koaxial zur Radnabe angeordnet sind,
- eine Anzahl von balligen Rollkörpern, die zwischen den Radscheiben angeordnet, gleichmäßig entlang eines

Umfangsmantels des Rades verteilt, mit ihren Rollachsen in einem Diagonalwinkel zur Rotationsachse der Radnabe ausgerichtet und an ihren gegenüberliegenden Enden frei drehbar bezüglich der Radscheiben gelagert sind,
wobei die Rollkörper an Aufnahmebauteilen frei drehbar gelagert und die Aufnahmebauteile an den Radscheiben befestigt sind.

Die Aufnahmebauteile bewirken eine exakte Ausrichtung der gegenüberliegenden Lagerstellen für die Rollkörper unabhängig von den Torsionskräften, welche auf die Nabe oder die Radscheiben einwirken. Jeder Rollkörper kann an seinem Aufnahmebauteil vormontiert werden. Im Ergebnis bedeutet dies, dass jede Lagerung der Rollkörper einzeln und unabhängig voneinander genau einstellbar sind. Diese unabhängige Einstellbarkeit erfolgt bezüglich des Aufnahmebauteils und ist damit unabhängig von den Radscheiben. Jedes Aufnahmebauteil nimmt die beiden gegenüberliegenden Lagerstellen eines einzelnen Rollkörpers auf. Jeder Rollkörper ist somit an einem eigenen Aufnahmebauteil gelagert. Jedes Aufnahmebauteil ist sowohl an der einen als auch an der anderen Radscheibe befestigt. Jedes Aufnahmebauteil trägt einen Rollkörper, so dass für jeden Rollkörper eines Omnidirektional-Rades ein eigenes Aufnahmebauteil am Omnidirektional-Rad vorgesehen ist. Jedes Aufnahmebauteil ist an beiden Radscheiben befestigt. Jedes Aufnahmebauteil bildet somit einen brückenartigen Träger, welcher den axialen Abstand der beiden Radscheiben festlegt. Torsionskräfte werden folglich über die Aufnahmebauteile und nicht, oder allenfalls nur in geringem Maße, über die Rollkörper von einer Radscheibe auf die andere Radscheiben übertragen.

Jeder einzelne Rollkörper ist somit an jeweils einem eigenen Aufnahmebauteil frei drehbar gelagert und jedes Aufnahmebauteil ist an beiden Radscheiben befestigt. Die Aufnahmebauteile bewirken somit eine exakte Ausrichtung der gegenüberliegenden Lagerstellen für die Rollkörper unabhängig von den Torsionskräften, welche auf die Nabe oder die Radscheiben einwirken. Dadurch ergibt sich für jeden Rollkörper eine vormontierte Rollkörpereinheit. Im Ergebnis bedeutet dies, dass jede Lagerung der Rollkörper einzeln und unabhängig voneinander genau einstellbar sind. Diese unabhängige Einstellbarkeit erfolgt bezüglich des Aufnahmebauteils und ist damit unabhängig von den Radscheiben. Mehrere einzeln vormontierte Rollkörpereinheiten können dann in einfacher Weise an dem Rad, bzw. den Radscheiben befestigt werden.

Es kann jeder einzelne Rollkörper an jeweils einem eigenen Aufnahmebauteil frei drehbar gelagert sein. So wird jedem Rollkörper ein eigenes Aufnahmebauteil zugeordnet. D.h. die Lagerungen jedes einzelnen Rollkörpers werden an einem eigenen Aufnahmebauteil vorgesehen. So kann jeder Rollkörper an einem individuellen Aufnahmebauteil gelagert werden und allein bezüglich dieses Aufnahmebauteil hinsichtlich Flucht, Versatz, Abstand und Toleranzen eingestellt werden. Dadurch ergibt sich für jeden Rollkörper eine vormontierte Rollkörpereinheit. Mehrere Rollkörpereinheiten können dann in einfacher Weise an dem Rad, bzw. den Radscheiben befestigt werden.

Die vorgeschlagene Aufnahme und Lagerung der Rollen am Umfang des Rads ermöglicht den Einsatz einer kleinen Nabe für das Rad. Das Rad weist dabei Seitenwände auf, mit denen der Abstand zwischen Nabe und Rollen überbrückt werden. Die Rollen sind in Halterungen gelagert, die auf einem Steg pro Rolle angebracht sind.

Daraus können sich die folgenden Vorteile ableiten:
- Die Lagerungen der einzelnen Rollen sind unabhängig voneinander und können daher separat eingestellt werden.
- Durch die Unabhängigkeit der Rollen zueinander bestehen nicht so große Anforderungen an die Fertigungstolleranzen der Seitenwände, d.h. der Radscheiben.
- Die Tragstruktur der Räder wird durch zwei Seitenwände oder Radscheiben an den Rädern gebildet. Dies ermöglicht es eine beliebig große Nabe für das Rad einzusetzen.
- Jede Rollen ist auf einem eigenen Steg gelagert, der die beiden Seitenwände bzw. Radscheiben miteinander verbindet.
- Die Radkonstruktion ist bei geringerem Materialaufwand steifer, da über die Nabe, die beiden Seitenwände bzw.

Radscheiben und evtl. Stege ein geschlossener Kraftfluss möglich ist.

Die erfindungsgemäße allgemeine Lösung und die im Folgenden beschriebenen speziellen Lösungsvarianten streben somit die Ziele an:
- Die Lagerungen der Rollen am Umfang des Rads sollen voneinander unabhängig sein.
- Die Lagerungen der Rollen am Umfang des Rads können getrennt voneinander eingestellt werden.
- Die Seitenscheiben bzw. Radscheiben des Rads können mit geringeren Toleranzen gefertigt werden, als bei den gattungsgemäßen Rädern nach dem Stand der Technik, nach dem die Positionen aller Lagerungen und damit der Rollen über die Seitenscheiben bzw. Radscheiben bestimmt werden.
- Das Rad hat eine höhere Steifigkeit in Bezug auf das Gesamtgewicht.
- Eine Torsion der Nabe oder sonstiger Tragstrukturen des Rads beeinträchtigt die Lagerungen der Rollen nicht.

Das Aufnahmebauteil kann stegförmig sich von einer ersten Stirnseite zu einer zweiten Stirnseite des Rollkörpers erstreckend gestaltet und zu seiner Befestigung zwischen den Radscheiben des Rades mit endseitig gegenüberliegenden Flanschabschnitten versehen sein. Das Aufnahmebauteil bildet dabei einen Querträger, der im Bereich der Radscheibenränder auch eine zusätzliche Versteifung des Rades bewirkt. Das stegförmige Aufnahmebauteil bildet eine weitgehend starre Verbindung der beiden gegenüberliegenden Lagerstellen für den zugehörigen Rollkörper. Das stegförmige Aufnahmebauteil kann einstückig ausgebildet sein. Es kann insbesondere einen rechteckigen Querschnitt aufweisen.

In einer Weiterbildung können die Flanschabschnitte des Aufnahmebauteils an aufeinander zuweisenden Innenseiten der Radscheiben befestigt sein. In einer anderen Weiterbildung könnten die Aufnahmebauteile bspw. im Bereich des äußeren Umfangs der Radscheiben befestigt sein. Diese Befestigung am äußeren Umfang kann insbesondere kraft- und/oder formschlüssig erfolgen. Die Radscheiben müssen dazu nicht notwendiger weise eine kreisförmige Kontur aufweisen. Vielmehr können die Radscheiben eine von der Kreisform abweichende Kontur aufweisen, bspw. in Polygonform oder in Art einer sternförmigen Kontur. Durch die Umfangkontur wird die Lage der Aufnahmebauteile und damit die Lage der Rollkörper definiert.

Dabei können die Flanschabschnitte Vorsprünge zum formschlüssigen Eingreifen in Nuten der Radscheiben aufweisen. Die Vorsprünge der Flanschabschnitte der Aufnahmebauteile greifen dabei formschlüssig in die Nuten der Radscheiben ein. Die Nuten können jegliche Gestalt aufweisen, die geeignet ist, eine nischenartige Ausnehmung zu bilden, in die korrespondierende Vorsprünge der Aufnahmebauteile formschlüssig eingreifen können. Die Vorsprünge und Nuten dienen zumindest einer formschlüssigen Vorfixierung der Aufnahmebauteile an dem Rad, ohne das einzige Befestigungsmittel sein zu müssen. So kann bspw. eine Vorfixierung durch das bloße Einsetzen der Aufnahmebauteile in die Nuten der Radscheiben erreicht werden, wobei eine lasttragende Befestigung durch die Klemmkraft an den Stirnseiten von Aufnahmebauteile und Radscheiben bspw. durch lösbare Schraubverbindungen erfolgt. Statt einer Schraubverbindung können auch andere Befestigungsmittel vorgesehen werden. Diese könnten lösbar oder unlösbar gestaltet sein.

In einer Ausgestaltung der Aufnahmebauteile können den gegenüberliegenden Stirnseiten jedes einzelnen Rollkörpers jeweils ein Haltewinkel zugeordnet sein, wobei zwischen Rollkörper und Haltewinkel jeweils ein Drehlager ausgebildet ist und die Haltewinkel an dem Aufnahmebauteil befestigt sind. Damit jeder Rollkörper von seinen gegenüberliegenden Stirnseiten an dem Aufnahmebauteil drehbar gelagert werden kann, muss das Aufnahmebauteil den Rollkörper C-förmig umgreifen können. Das Aufnahmebauteil kann insofern einstückig bspw. gegossen oder aus dem Vollen gefräst hergestellt werden. Fertigungstechnisch kann es jedoch sinnvoll sein, das Aufnahmebauteil mehrteilig auszugestalten. In diesem Fall kann das Aufnahmebauteile bspw. aus einem flachen, ebenen Grundträger bestehen, an dem zwei gegenüberliegende Haltewinkel befestigt sind, um die C-förmige Gestalt des Aufnahmebauteils zu erhalten. Dies hat den Vorteil, dass die Lagerstellen zur Aufnahme von Drehlagerelementen wie bspw. Kugel- oder Rollenlagern fertigungstechnisch einfach in den Haltewinkeln hergestellt werden können, bevor sie an den Grundträgern befestigt werden. Die Haltewinkel können bspw. durch Schrauben mit dem Grundträger verbunden werden. So können auch aufgrund der Lösbarkeit der Schraubverbindungen einzelne Lager bzw. Haltewinkel bei Bedarf, beispielsweise wegen Verschleiß, ausgetauscht werden.

Die Erfindung betrifft auch ein Verfahren zur Montage von Rollkörpern eines Omnidirektional-Rades mit den folgenden Schritten:
- bündiges Ansetzen eines ersten Haltewinkels an eine Sitzfläche eines Aufnahmebauteils,
- Befestigen des ersten Haltewinkels an dem Aufnahmebauteil,
- Einsetzen eines ersten stirnseitigen Endes des Rollkörpers in eine erste Lagerstelle des ersten Haltewinkels,
- Ansetzen einer zweiten Lagerstelle eines zweiten Haltewinkels an ein zweites stirnseitiges Ende des Rollkörpers sowie des zweiten Haltewinkels an das Aufnahmebauteil,
- Justieren des zweiten Haltewinkels bis die erste Lagerstelle und die zweite Lagerstelle mit der Rollachse des Rollkörpers fluchtet,
- Befestigen des zweiten Haltewinkels an dem Aufnahmebauteil in der justierten Lage.

In einer Weiterbildung des erfindungsgemäßen Verfahrens kann als weiterer Schritt vorgesehen sein:
- Befestigen der die Rollkörper tragenden Aufnahmebauteile zwischen zwei Radscheiben des Omnidirektional-Rades.

Dieses Befestigen kann insbesondere erfolgen, durch:
- Einsetzen von Vorsprüngen der Flanschabschnitte der Aufnahmebauteile in gegenüberliegende Nuten in den Radscheiben des Omnidirektional-Rades,
- Festschrauben der Aufnahmebauteile an die Radscheiben.

Die Erfindung bezieht sich auch auf ein omnidirektional bewegliches Fahrwerk mit Omnidirektional-Rädern mit den vorbeschriebenen erfindungsgemäßen Merkmalen.

Die Erfindung bezieht sich auch auf eine Verwendung eines omnidirektional beweglichen Fahrwerks zur Fortbewegung eines autonomen Manipulators.

Die Erfindung ist anhand eines Ausführungsbeispiels näher erläutert. Alle Merkmale dieses konkreten Ausführungsbeispiels können weitere vorteilhafte Ausgestaltungen der Erfindung offenbaren.

Es zeigen:
- Fig. 1: eine schematische Darstellung eines omnidirektional beweglichen Fahrwerks;
- Fig. 2: eine perspektivische Ansicht eines kompletten erfindungsgemäßen Omnidirektional-Rades;
- Fig. 3: eine perspektivische Ansicht des Omnidirektional- Rades aus Fig. 2 mit einem einzigen erfindungsgemäßen Rollkörper und Aufnahmebauteil in seiner Montageposition an Radscheiben;
- Fig. 4: eine perspektivische Ansicht des einzelnen Rollkörpers mit Aufnahmebauteil aus Fig. 3.

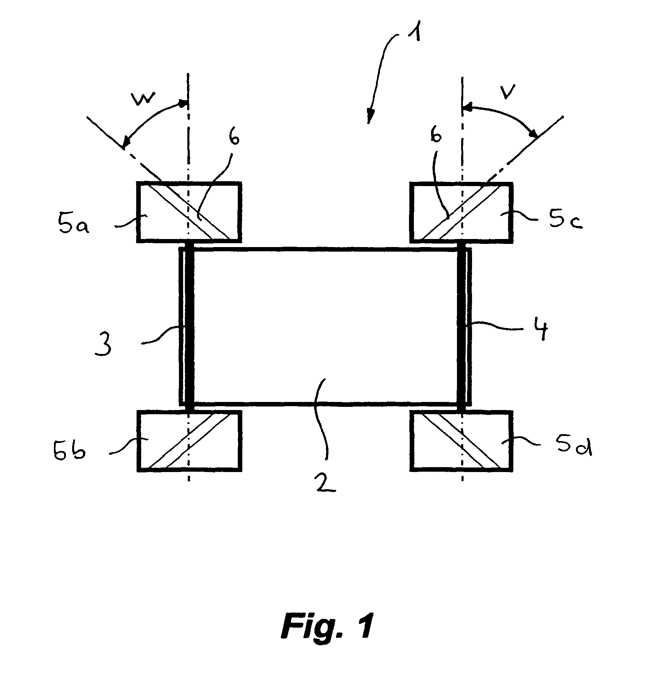

Die Fig. 1 zeigt ein omnidirektional bewegliches Fahrwerk 1 mit einem Chassis 2, sowie einer ersten geometrischen Radachse 3 und einer zweiten geometrischen Radachse 4. Ausgerichtet entlang der ersten Radachse 3 trägt das Chassis 2 ein rechtes vorderes Omnidirektional-Rad 5a und ein linkes vorderes Omnidirektional-Rad 5b. Ausgerichtet entlang der zweiten Radachse 4 trägt das Chassis 2 ein rechtes hinteres Omnidirektional-Rad 5c und ein linkes hinteres Omnidirektional-Rad 5d. Jeder Omnidirektional-Rad 5a, 5b, 5c, 5d ist mit einem eigenen Antrieb verbunden. Jeder Antrieb ist unabhängig von den anderen Antrieben sowohl bezüglich Drehgeschwindigkeit als auch bezüglich Drehrichtung ansteuerbar. Jeweils ein diagonales Rad-Paar 5a, 5c und 5b, 5d weist Rollkörper 6 auf, die in einer selben Richtung in einem Winkel W schräg zur Radachse 3 bzw. Radachse 4 verlaufend ausgerichtet sind. Das jeweils andere diagonale Rad-Paar 5a, 5c und 5b, 5d weist Rollkörper 6 auf, die in einer selben Richtung in einem zum Winkel W entgegengesetzten Winkel V schräg zur Radachse 3 bzw. Radachse 4 verlaufend ausgerichtet sind. Üblicherweise werden die Rollkörper 6 in einem Winkel W und V von 45° angeordnet. Es können in Sonderausführungen jedoch auch andere Winkel W und V, bspw. zwischen 30° und 60° realisiert sein. Bewegen sich alle vier Räder 5a, 5b, 5c und 5d mit gleicher Geschwindigkeit in derselben Drehrichtung, so bewegt sich das Fahrwerk 1 geradeaus vorwärts. Drehen die Räder 5a, 5b oder 5c, 5d jeweils derselben Radachse 3 oder 4 gegenläufig und alle Räder 5a, 5b, 5c und 5d mit gleicher Drehzahl, so bewegt sich das Fahrwerk 1 seitwärts, also senkrecht zur ursprünglichen Fahrtrichtung. Drehen die diagonalen Rad-Paare 5a, 5d oder 5b, 5c jeweils mit gleicher Drehzahl und alle Räder 5a, 5b, 5c und 5d mit derselben Drehrichtung, so bewegt sich das Fahrwerk 1 diagonal, bzw. schräg d.h. in einem Winkel der zwischen der Vorwärtsrichtung und Seitwärtsrichtung liegt. Drehen jeweils das eine Rad-Paar 5a, 5c der rechten Seite in eine Drehrichtung und das andere Rad-Paar 5b, 5d der linken Seite in die entgegengesetzte Drehrichtung, so dreht sich das Fahrwerk 1 um seine Mitte.

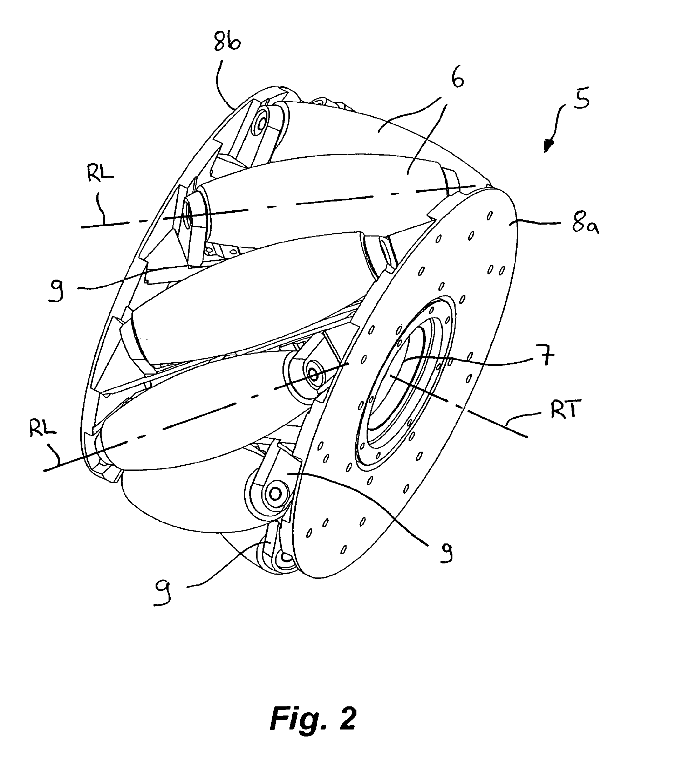

In der Fig. 2 ist ein Ausführungsbeispiel eines erfindungsgemäßen Omnidirektional-Rades 5 dargestellt. Das Omnidirektional-Rad 5 weist eine Radnabe 7 auf. Die Radnabe 7 ist um eine Rotationsachse RT drehbar. An gegenüberliegenden Enden der Radnabe 7 sind zwei Radscheiben 8a und 8b angeflanscht. Die Radscheiben 8a und 8b besitzen eine kreisscheibenförmige Gestalt und sind koaxial zur Radnabe 7 angeordnet. Über die Radscheiben 8a und 8b wird ein über die Radnabe 7 eingeleitetes Drehmoment an die Rollkörper 6 weitergeleitet. Das Omnidirektional-Rad 5 weist mehrere Rollkörper 6 auf, die in gleichmäßigem Abstand voneinander entlang eines Mantelbereichs des Omnidirektional-Rades 5 verteilt angeordnet sind. In Abhängigkeit des Raddurchmessers und des Rollkörperdurchmessers können verschieden Anzahlen von Rollkörpern 6 je Omnidirektional-Rad 5 vorgesehen sein. Alle Rollkörper 6 orientieren sich mit ihren Rollachsen RL in einem Diagonalwinkel, also schräg zur Rotationsachse RT in gleicher Weise und demselben Winkel W. Üblicherweise werden die Rollkörper 6 in einem Winkel W von 45° angeordnet. Es können in Sonderausführungen jedoch auch andere Winkel W, bspw. zwischen 30° und 60° realisiert sein. Jeder Rollkörper 6 ist an einem eigenen Aufnahmebauteil 9 drehbar gelagert.

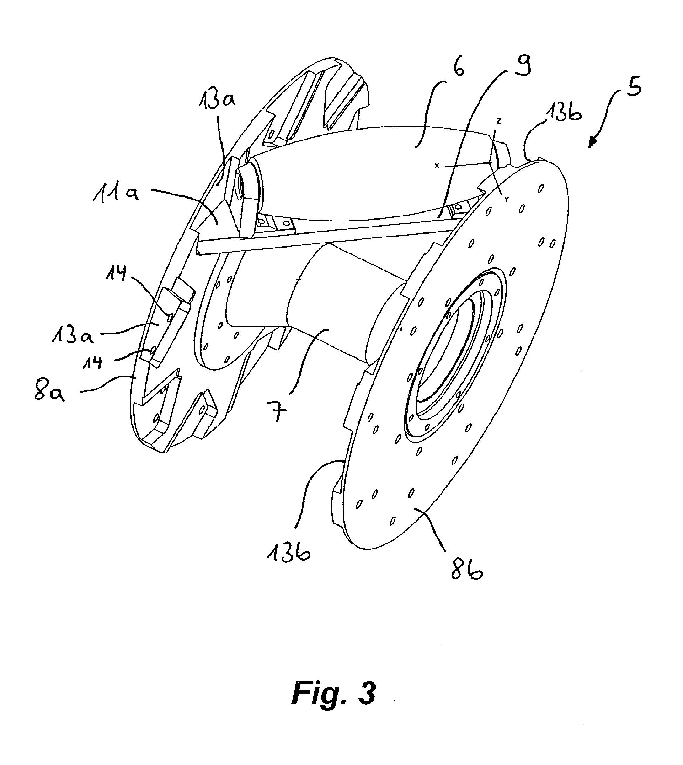

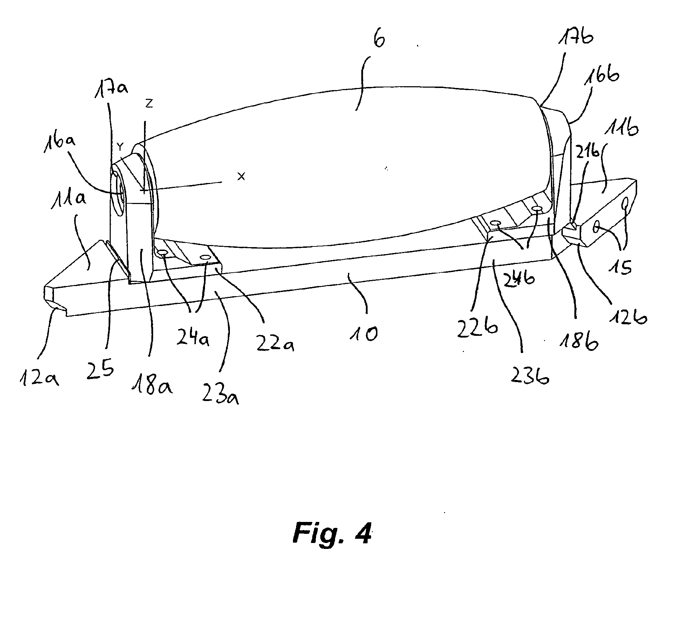

Das Aufnahmebauteil 9 ist in den Figuren 3 und 4 näher erläutert. In Fig. 3 ist das Omnidirektional-Rad 5 aus Fig. 2 zur Erleichterung der bildlichen Darstellung mit einem einzigen erfindungsgemäßen Rollkörper 6 und dem Aufnahmebauteil 9 in seiner Montageposition an den Radscheiben 8a und 8b dargestellt. Das Aufnahmebauteil 9 weist einen flachen, ebenen Grundträger 10 auf. Der Grundträger 10 weist einen rechteckigen Querschnitt auf. An den gegenüberliegenden schmalen Stirnseiten des Grundträgers 10 befinden sich Flanschabschnitte 11a, 11b. Die Flanschabschnitte 11a, 11b dienen zur Befestigung des Grundträgers 10 an den Innenseiten der Radscheiben 8a und 8b. Zu dieser Befestigung weisen die Flanschabschnitte 11a, 11b Vorsprünge 12a und 12b (Fig. 4) auf. Die Vorsprünge 12a und 12b greifen in den Montagepositionen für das Aufnahmebauteil 9 in korrespondierende Nuten 13a und 13b an den Innenseiten der Radscheiben 8a und 8b ein. Die Nuten 13a und 13b sind am Umfang der Radscheiben 8a und 8b randoffen ausgebildet, so dass die Grundträger 10 in radialer Richtung zwischen den beiden an der Radnabe 7 vormontierten Radscheiben 8a und 8b eingeschoben werden können. Die endgültige Fixierung des Grundträgers 10 an den Radscheiben 8a und 8b erfolgt mittels nicht dargestellter Schrauben durch die Bohrungen 14 in den Radscheiben 8a und 8b.

Wie in Fig. 4 dargestellt sind in den Stirnseiten der Vorsprünge 12a und 12b Gewindegänge 15 eingebracht, in denen die Schrauben über die Bohrungen 14 einzuschrauben sind. Der Rollkörper 6 weist an gegenüberliegenden Stirnseiten Achszapfen 16a und 16b auf, die in Lagerstellen 17a und 17b geführt sind. Die Lagerstellen 17a und 17b sind in zugehörigen Haltewinkeln 18a und 18b befestigt. Der Haltewinkel 18a weist dazu einen in Fig. 4 vertikal dargestellten Haltewinkelschenkel 19a für die Lagerstellen 17a und einen horizontal dargestellten Haltewinkelschenkel 20a auf, über den der Haltewinkel 18a an dem Grundträger 10 befestigt ist. In gleicher Weise besitzt der Haltewinkel 18b einen in Fig. 4 vertikal dargestellten Haltewinkelschenkel 19b für die Lagerstellen 17b und einen horizontal dargestellten Haltewinkelschenkel 20b auf, über den der Haltewinkel 18b an dem Grundträger 10 befestigt ist. Zwischen den in Fig. 4 vertikal dargestellten Haltewinkelschenkel 19a und 19b ist der Rollkörper 6 lagedefiniert drehbar gelagert. Bei einer Montage wird zunächst der Haltewinkel 18b gegen eine Sitzfläche 21b des Grundträgers 10 geschoben und die vordere Seitenfläche 22b des Haltewinkel 18b bündig mit der vorderen Seitenfläche 23b des Grundträgers 10 eingerichtet. Anschließend wird der Haltewinkel 18b über die Bohrungen 24b an den Grundträger 10 geschraubt. Nun wird der Rollkörper 6 in die Lagerstelle 17b eingesetzt und der Haltewinkel 18a an den Achszapfen 16a des Rollkörpers 6 angesetzt. Über ein Passblech 25 wird der Haltewinkel 18b in eine ausgerichtete Position gebracht, in der hinsichtlich Flucht, Versatz, Abstand und Toleranzen die Lagerung des Rollkörpers 6 eingestellt wird. Daneben wird die vordere Seitenfläche 22a des Haltewinkel 18a bündig mit der vorderen Seitenfläche 23a des Grundträgers 10 eingerichtet. Anschließend wird der Haltewinkel 18a über die Bohrungen 24a an den Grundträger 10 geschraubt. Das Passblech 25 kann nach der Befestigung des Haltewinkels 18a aus dem Grundträger 10 entnommen werden.

Derart kann jeder Rollkörper 6 an seinem Aufnahmebauteil 9 vormontiert werden. Im Ergebnis bedeutet dies, dass jede Lagerstelle 17a, 17b der Rollkörper 6 einzeln und unabhängig voneinander genau einstellbar ist. Diese unabhängige Einstellbarkeit erfolgt bezüglich des Aufnahmebauteils 9 und ist damit unabhängig von den Radscheiben 8a und 8b.

## Patentansprüche

1. Omnidirektional-Rad, aufweisend:
- eine Radnabe (7), die um eine Rotationsachse (RT) drehbar ist,
- zwei mit der Radnabe (7) verbundene Radscheiben (8a, 8b), die koaxial zur Radnabe (7) angeordnet sind,
- eine Anzahl von balligen Rollkörpern (6), die zwischen den Radscheiben (8a, 8b)angeordnet, gleichmäßig entlang eines Umfangsmantels des Rades (5a-5d) verteilt, mit ihren Rollachsen (RA) in einem Diagonalwinkel zur Rotationsachse (RT) der Radnabe (7) ausgerichtet und an ihren gegenüberliegenden Enden frei drehbar bezüglich der Radscheiben (8a, 8b) gelagert sind, **dadurch gekennzeichnet daß** die Rollkörper (6) an Aufnahmebauteilen (9) frei drehbar gelagert und die Aufnahmebauteile (9) an den Radscheiben (8a, 8b) befestigt sind.

2. Omnidirektional-Rad nach Anspruch 1, bei dem jeder einzelne Rollkörper (6) an jeweils einem eigenen Aufnahmebauteil (9) frei drehbar gelagert ist.

3. Omnidirektional-Rad nach Anspruch 2, wobei das Aufnahmebauteil (9) stegförmig sich von einer ersten Stirnseite zu einer zweiten Stirnseite des Rollkörpers (6) erstreckend gestaltet und zu seiner Befestigung zwischen den Radscheiben (8a, 8b) des Rades (5a-5d) mit endseitig gegenüberliegenden Flanschabschnitten (11a, 11b) versehen ist.

4. Omnidirektional-Rad nach Anspruch 3, wobei die Aufnahmebauteile am äußeren Umfang der Radscheiben befestigt sind.

5. Omnidirektional-Rad nach Anspruch 3, die Flanschabschnitte (11a, 11b) des Aufnahmebauteils (9) an aufeinander zuweisenden Innenseiten der Radscheiben (8a, 8b) befestigt sind.

6. Omnidirektional-Rad nach Anspruch 5, wobei die Flanschabschnitte (11a, 11b) Vorsprünge (12a, 12b) zum formschlüssigen Eingreifen in Nuten (13a, 13b) der Radscheiben (8a, 8b) aufweisen.

7. Omnidirektional-Rad nach einem der Ansprüche 1 bis 6, wobei gegenüberliegenden Stirnseiten jedes einzelnen Rollkörpers (6) jeweils ein Haltewinkel (18a, 18b) zugeordnet ist, zwischen Rollkörper (6) und Haltewinkel (18a, 18b) jeweils ein Drehlager (17a, 17b) ausgebildet ist und die Haltewinkel (18a, 18b) an dem Aufnahmebauteil (9) befestigt sind.

8. Verfahren zur Montage von Rollkörpern (6) eines Omnidirektional-Rades (5a-5d) mit den folgenden Schritten:
- bündiges Ansetzen eines ersten Haltewinkels (18b) an eine Sitzfläche (21b) eines Aufnahmebauteils (9),
- Befestigen des ersten Haltewinkels (18b) an dem Aufnahmebauteil (9),
- Einsetzen eines ersten stirnseitigen Endes des Rollkörpers (6) in eine erste Lagerstelle (17b) des ersten Haltewinkels (18b),
- Ansetzen einer zweiten Lagerstelle (17a) eines zweiten Haltewinkels (18a) an ein zweites stirnseitiges Ende des Rollkörpers (6) sowie des zweiten Haltewinkels (18a) an das Aufnahmebauteil (9),
- Justieren des zweiten Haltewinkels (18a) bis die erste Lagerstelle (17b) und die zweite Lagerstelle (17a) mit der Rollachse (RL) des Rollkörpers (6) fluchtet,
- Befestigen des zweiten Haltewinkels (18a) an dem Aufnahmebauteil (9) in der justierten Lage.

9. Verfahren nach Anspruch 8 mit den weiteren Schritten:
- Befestigen der die Rollkörper (6) tragenden Aufnahmebauteile (9) zwischen zwei Radscheiben (8a, 8b) des Omnidirektional-Rades (5a-5d).

10. Omnidirektional bewegliches Fahrwerk (1) mit Omnidirektional-Rädern (5a-5d) nach einem der Ansprüche 1 bis 7.

11. Verwendung eines omnidirektional beweglichen Fahrwerks (1) nach Anspruch 10, zur Fortbewegung eines autonomen Manipulators.

## Claims

1. Omnidirectional wheel comprising:
- a wheel hub (7), rotatable about an axis of rotation (RT),
- two wheel discs (8a, 8b) attached to the wheel hub (7) which are coaxial to the wheel hub (7),
- a number of spheric rolling elements (6), located between the wheel discs (8a, 8b), distributed evenly along a peripheral area of the wheel (5a-5d), with their roller axes (RA) aligned in a diagonal angle to the axis of rotation (RT) of the wheel hub (7), and mounted free to rotate about the wheel discs (8a, 8b) at their opposite ends, **characterized in that** the rolling elements (6) are mounted free to rotate on receptacle components (9) which are attached on the wheel discs (8a, 8b).

2. Omnidirectional wheel according to claim 1, in which each of the individual rolling elements (6) is mounted so that each is freely rotatable with its own receptacle component (9).

3. Omnidirectional wheel according to claim 2, wherein the receptacle component (9) comprises a bar designed to extend from a first facing side end to a second facing side end of the rolling element (6) and equipped with opposite flange segments (11a, 11b) for its attachment between the wheel discs (8b, 8a,) of the wheel (5a 5d).

4. Omnidirectional wheel according to claim 3, wherein the receptacle components are mounted on the outer circumference of the wheel discs.

5. Omnidirectional wheel according to claim 3, wherein the flange segments (11a, 11b) of the receptacle component (9) are attached to matching insides of the wheel discs (8a, 8b).

6. Omnidirectional wheel according to 5, wherein the flange segments (11a and 11b) comprise projections (12a, 12b) for positive engagement with grooves (13a, 13b) of the wheel discs (8a, 8b).

7. Omnidirectional wheel according to one of the claims 1 to 6, wherein the opposite facing sides of each rolling element (6) are each assigned to a bracket (18a, 18b) a pivot bearing (17a, 17b) is provided between the rolling element (6) and the bracket (18a, 18b) and the brackets (18a, 18b) are fixed to the receptacle component (9).

8. A method for the assembling of rolling elements (6) of an omnidirectional wheel (5a-5d) comprising the following steps:
- flushly placing of a first bracket (18b) to a bearing surface (21b) of a receptacle component (9),
- attaching of the first bracket (18b) to the receptacle component (9),
- inserting of a first facing side front end of the rolling element (6) in a first bearing position (17b) of the first bracket (18b),
- placing a second bearing position (17a) of a second bracket (18a) at a second facing side end of the rolling element (6) and the second bracket (18a) to the receptacle component (9),
- adjusting of the second bracket (18a) until the first bearing position (17b) and the second bearing position (17a) are aligned with the roll axis (RL) of the rolling element (6),
- attaching of the second bracket (18a) (9) to the receptacle component (9) in the adjusted position.

9. The method of claim 8 further comprising the following steps:
- attaching of the receptacle components (9) supporting the rolling elements (6) between two wheel discs (8a, 8b) of the omnidirectional wheel (5a-5d).

10. Omnidirectional mobile chassis (1) with omnidirectional wheels (5a-5d) according to one of the claims 1 to 7.

11. Using an omnidirectional mobile chassis (1) according to claim 10, for movement of an autonomous manipulator.

## Revendications

1. Roue omnidirectionnelle présentant
- un moyeu de roue (7) qui est rotatif autour d'un axe de rotation (RT),
- deux disques de roue (8a, 8b) reliés au moyeu de roue, qui sont agencés coaxialement au moyeu de roue (7),
- un nombre de corps de roulement (6) bombés qui sont agencés entre les disques de roue (8a, 8b), répartis régulièrement le long d'une enveloppe périphérique de la roue (5a - 5d), orientés avec leurs axes de roulement (RA) dans un angle diagonal par rapport à l'axe de rotation (RT) du moyeu de roue (7) et montés, à leurs extrémités opposées, librement rotatifs par rapport aux disques de roue (8a, 8b), **caractérisée en ce que** les corps de roulement (6) sont montés librement rotatifs sur des éléments de réception (9) et **en ce que** les éléments de réception (9) sont fixés sur les disques de roue (8a, 8b).

2. Roue omnidirectionnelle selon la revendication 1, dans laquelle chaque corps de roulement (6) individuel est monté librement rotatif sur un élément de réception (9) propre.

3. Roue omnidirectionnelle selon la revendication 2, dans laquelle l'élément de réception (9) est réalisé en forme d'entretoise en s'étendant depuis une première face frontale jusqu'à une deuxième face frontale du corps de roulement (6) et, pour sa fixation entre les disques de roues (8a, 8b) de la roue (5a-5d), il est pourvu de tronçons de brides (11a, 11b) situés sur les côtés d'extrémité opposés.

4. Roue omnidirectionnelle selon la revendication 3, dans laquelle les éléments de réception sont fixés sur la périphérie extérieure des disques de roue.

5. Roue omnidirectionnelle selon la revendication 3, dans laquelle les tronçons de bride (11a, 11b) de l'élément de réception (9) sont fixés sur des faces intérieures, tournées l'une vers l'autre, des disques de roue (8a, 8b).

6. Roue omnidirectionnelle selon la revendication 5. dans laquelle les tronçons de bride (11a, 11b) présentent des saillies (12a, 12b) pour s'engager par coopération de formes dans des gorges (13a, 13b) des disques de roue (8a, 8b).

7. Roue omnidirectionnelle selon l'une des revendications 1 à 6, dans laquelle une cornière de retenue (18a, 18b) est associée aux faces frontales opposées de chaque corps de roulement (6) individuel, un palier rotatif (17a, 17b) respectif est réalisé entre le corps de roulement (6) et les cornières de retenue (18a, 18b), et les cornières de retenue (18a, 18b) sont fixées sur l'élément de réception (9).

8. Procédé de montage de corps de roulement (6) d'une roue omnidirectionnelle (5a-5d) avec les étapes suivantes :
- mise en place en affleurement d'une première cornière de retenue (18b) sur une surface d'appui (2ab) d'un élément de réception (9),
- fixation de la première cornière de retenue (18b) sur l'élément de réception (9),
- insertion d'une première extrémité frontale du corps de roulement (6) dans un premier point de palier (17b) de la première cornière de retenue (18b),
- mise en place d'un deuxième point de palier (17a) d'une deuxième cornière de retenue (18a) sur une deuxième extrémité frontale du corps de roulement ainsi que de la deuxième cornière de retenue (18a) sur l'élément de réception (9),
- ajustage de la deuxième cornière de retenue (18a) jusqu'à ce que le premier point de palier (17b) et le deuxième point de palier (17a) soient en alignement avec l'axe de roulement (RL) du corps de roulement (6),
- fixation de la deuxième cornière de retenue (18a) sur l'élément de réception (9) dans la position ajustée.

9. Procédé selon la revendication 8 avec les autres étapes :
- fixation des éléments de réception (9) portant les corps de roulement (6) entre deux disques de roue (8a, 8b) de la roue omnidirectionnelle (5a-5d).

10. Châssis omnidirectionnellement mobile (1) avec des roues omnidirectionnelles (5a-5d) selon l'une des revendications 1 à 7.

11. Utilisation d'un châssis omnidirectionnellement mobile (1) selon la revendication 10, pour le déplacement d'un manipulateur autonome.
